(19) Europäisches Patentamt
European Patent Office
Office européen des brevets

(11) **EP 3 435 776 B1**

(12) **EUROPEAN PATENT SPECIFICATION**

(45) Date of publication and mention
of the grant of the patent:
**01.01.2020 Bulletin 2020/01**

(51) Int Cl.:
*A23D 9/007* (2006.01)    *A23D 9/02* (2006.01)
*A23L 29/00* (2016.01)    *A23L 29/262* (2016.01)

(21) Application number: **17716699.8**

(22) Date of filing: **27.03.2017**

(86) International application number:
**PCT/US2017/024263**

(87) International publication number:
**WO 2017/172590 (05.10.2017 Gazette 2017/40)**

(54) **METHOD OF MAKING OLEOGEL**

VERFAHREN ZUR HERSTELLUNG EINES OLEOGELS

PROCÉDÉ DE FABRICATION D'OLÉOGEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2016 US 201662315277 P**

(43) Date of publication of application:
**06.02.2019 Bulletin 2019/06**

(73) Proprietor: **Dow Global Technologies, LLC
Midland, MI 48674 (US)**

(72) Inventors:
• **HILD, Alexandra**
29699 Bomlitz (DE)
• **KNARR, Matthias**
29699 Bomlitz (DE)
• **HUEBNER-KEESE, Britta**
29699 Bomlitz (DE)
• **ERGUN, Roja**
Midland, MI 48674 (US)

(74) Representative: **Houghton, Mark Phillip
Patent Outsourcing Limited
Cornerhouse
1 King Street
Bakewell
Derbyshire DE45 1DZ (GB)**

(56) References cited:
WO-A1-2010/143066    WO-A1-2014/004018
US-B1- 6 187 323

• **MA.A RUIZ MARTINEZ ET AL: "Influence of the
concentration of a gelling agent and the type of
surfactant on the rheological characteristics of
oleogels", IL FARMACO, vol. 58, no. 12, 1
December 2003 (2003-12-01), pages 1289-1294,
XP055117540, ISSN: 0014-827X, DOI:
10.1016/S0014-827X(03)00180-0**

**Description**

Fats that are solid at room temperature (23 °C) have been used in various food products for many years. Most solid fats contain an undesirably high proportion of saturated fats and/or trans fats, both of which have various nutritional disadvantages. It is desirable to replace the saturated fats and/or trans fats with unsaturated fats, which have various nutritional benefits. A common source of unsaturated fats is unsaturated oils such as vegetable oils, but these oils are typically liquid at room temperature or have melting points not far above room temperature. Simply replacing solid fat with liquid oil usually causes undesirable changes in the texture of the food product. It is desirable to replace the solid fat with a composition that is solid at room temperature and that contains unsaturated oil.

One approach to this problem has been the use of ethylcellulose oleogels, which are blends of unsaturated oil with a relatively small amount of ethylcellulose polymer. Ethylcellulose oleogels are solid at room temperature. In the course of developing the present invention it has been observed that many ethylcellulose oleogels tend to separate when stored at room temperature; that is, oil tends to leak out of the oleogel during storage. Such separation is undesirable.

Some ethylcellulose oleogels contain surfactant in addition to oil and ethylcellulose polymer. However, surfactants are normally non-nutritive, and it is desirable to remove unnecessary non-nutritive ingredients, such as surfactants, from food products.

WO2010/143066 describes oleogels that contain ethylcellulose polymer, oil, and surfactant. WO2010/143066 describes processes in which mixtures of ethylcellulose polymer and oil are heated and agitated, but does not describe any methods that control the rate of cooling of such mixtures after heating and agitation. It is desired to provide improved methods of making ethylcellulose oleogel that provide ethylcellulose oleogels that resist separation during storage and/or that have acceptable properties when made without surfactant. WO2014/004018 discloses a method of preparing an edible oleogel comprising combining an edible triacylglycerol oil or triacylglycerol fat and ethylcellulose in a weight ratio of from 99:1 to 80:20 to form a mixture, and heating and agitating the mixture at a temperature within the range of from 80 to 300 °C, wherein the heating and agitating is conducted under an inert atmosphere.

The following is a statement of the invention.

The present invention is a method of making an ethylcellulose oleogel comprising cooling a mixture of ethylcellulose polymer and oil from 100°C to 35°C at a rate of 0.6°C/min or slower.

An oleogel is made by the method of the present invention.

The following is a detailed description of the invention.

As used herein, the following terms have the designated definitions, unless the context clearly indicates otherwise.

Ethylcellulose polymer, as used herein, means a derivative of cellulose in which some of the hydroxyl groups on the repeating glucose units are converted into ethyl ether groups. The number of ethyl ether groups can vary. The number of ethyl ether groups is characterized by the "percent ethoxyl substitution." The percent ethoxyl substitution is based on the weight of the substituted product and determined according to a Zeisel gas chromatographic technique as described in ASTM D4794-94 (2003). The ethoxyl substitution (also called "ethyl ether content") is from 20 to 80%.

As used herein, the viscosity of an ethylcellulose polymer is the viscosity of a 5 weight percent solution of that ethylcellulose polymer in a solvent, based on the weight of the solution. The solvent is a mixture of 80% toluene and 20% ethanol by weight. The viscosity of the solution is measured at 25°C in an Ubbelohde viscometer.

A "polymer," as used herein is a relatively large molecule made up of the reaction products of smaller chemical repeat units. Polymers have weight-average molecular weight of 2,000 daltons or higher.

The softening point of a material is the temperature below which the material behaves as a solid and above which it begins to be capable of flow under mild to moderate stress. Softening point is measured by the ring and ball method according to ASTM E28-14.

As used herein, an oil is a material that has melting point of 35°C or less and that has one or more carbon atom per molecule. One category of oils is triglycerides, which are triesters of fatty acids with glycerol. Food oils are oils routinely consumed by human beings. Vegetable oils are triglycerides extracted from plants.

As used herein, an oleogel is a mixture of one or more oil and one or more ethylcellulose polymer that is solid at 25°C. The oleogel may be a relatively hard solid or a relatively soft solid. A cube of oleogel of height 2 cm, placed on a flat surface at 25°C, will resist collapsing under its own weight to the extent that the height after 1 minute will be 1 cm or higher.

As used herein, a surfactant is a substance that has a molecule that includes both a hydrocarbon portion and a hydrophilic portion. The hydrocarbon portion contains 4 or more carbon atoms connected to each other in a formation that is linear, branched, cyclic, or a combination thereof. The hydrocarbon portion further contains one or more hydrogen atom. The hydrophilic portion would be soluble in water if it existed as a separate molecule, disconnected from the remainder of the surfactant molecule. Hydrophilic portions may be, for example, ionic groups or nonionic water-soluble groups such as, for example, EO groups, which have the structure $-(CH_2CH_2-O-)_n-$, where n is 1 or higher. An ionic group is a group for which there is one or more value of pH between 4 and 12 at which, when plural ionic groups are in contact with water at that pH, 50 mole percent or more of the ionic groups will be in an ionized state. A surfactant with one or more ionic groups is an ionic surfactant, and a surfactant with no ionic group is a nonionic surfactant.

When a ratio is said herein to be X:1 or greater, it is meant that the ratio is Y:1, where Y is greater than or equal to X. For example, if a ratio is said to be 3:1 or greater, that ratio may be 3:1 or 5:1 or 100:1 but may not be 2:1. Similarly, when a ratio is said herein to be W:1 or less, it is meant that the ratio is Z:1, where Z is less than or equal to W. For example, if a ratio is said to be 15:1 or less, that ratio may be 15:1 or 10:1 or 0.1:1 but may not be 20:1.

Any ethylcellulose polymer may be used in the present invention. The ethoxyl substitution content of the ethylcellulose polymer is preferably 30% or more; more preferably 40% or more; more preferably 44% or more; preferably 47% or more; more preferably 48% or more. The ethoxyl substitution content of the ethylcellulose polymer is preferably 70% or less; more preferably 60% or less; more preferably 55% or less; more preferably 51% or less; more preferably 50% or less.

The ethylcellulose polymer preferably has viscosity of 2 mPa•s or higher; more preferably 5 mPa•s or higher; more preferably 12 mPa•s or higher; more preferably 16 mPa•s or higher. The ethylcellulose polymer preferably has viscosity of 5000 mPa•s or lower; more preferably 2000 mPa•s or lower; more preferably 1000 mPa•s or lower; more preferably 500 mPa•s or lower; more preferably 350 mPa•s or lower; more preferably 250 mPa•s or lower; more preferably 125 mPa•s or lower.

The ethylcellulose polymer has softening point of 100°C or higher; preferably 120°C or higher; more preferably 130°C or higher. The ethylcellulose polymer preferably has softening point of 160°C or lower; more preferably 150°C or lower; more preferably 140°C or lower.

Commercially available forms of ethylcellulose polymer which may be used in the invention include, for example, those available under the name ETHOCEL™, from The Dow Chemical Company, including, for example, ETHOCEL™ Standard 4, ETHOCEL™ Standard 7, ETHOCEL™ Standard 10, ETHOCEL™ Standard 20, ETHOCEL™ Standard 45, or ETHOCEL™ Standard 100 with ethoxyl substitution content from 48.0 to 49.5%. Other commercially available ethylcellulose polymers useful in embodiments of the invention include certain grades of AQUALON™ ETHYLCELLULOSE, available from Ashland, Inc., and certain grades of ASHACEL™ ethylcellulose polymers, available from Asha Cellulose Pvt. Ltd.

Preferably the amount of ethylcellulose polymer in the oleogel is, by weight based on the weight of the oleogel, 2% or more; more preferably 4% or more; more preferably 6% or more. Preferably the amount of ethylcellulose polymer in the oleogel is, by weight based on the weight of the oleogel, 20% or less; more preferably 18% or less; more preferably 16% or less; more preferably 14% or less.

The oleogel contains oil. Preferred oils are food oils. Preferred food oils are vegetable oils. Preferred vegetable oils are cottonseed oil, peanut oil, coconut oil, linseed oil, palm kernel oil, rapeseed oil (also known as canola oil), palm oil, sunflower oil, and mixtures thereof. Preferred vegetable oils are extracted from plant sources and have not been hydrogenated or modified by other chemical reaction. Preferred oils are triglycerides.

Preferably the amount of oil in the oleogel is, by weight based on the weight of the oleogel, 80% or more; more preferably 82% or more; more preferably 84% or more; more preferably 86% or more. Preferably the amount of oil in the oleogel is, by weight based on the weight of the oleogel, 98% or less; more preferably 96% or less; 94% or less.

Preferably, the oleogel either contains no nonionic surfactant or else contains nonionic surfactant in an amount such that the weight ratio of surfactant to ethylcellulose polymer is 0.02:1 or less; more preferably 0.01:1 or less. More preferably, the oleogel contains no nonionic surfactant. Preferably, the oleogel either contains no surfactant or else contains surfactant in an amount such that the weight ratio of surfactant to ethylcellulose polymer is 0.02:1 or less; more preferably 0.01:1 or less. More preferably, the oleogel contains no surfactant. Preferably, the oleogel either contains no compound other than oil and ethylcellulose polymer or else contains a total of all compounds other than oil and ethylcellulose polmer in an amount such that the weight ratio of the sum of all compounds other than oil and ethylcellulose polymer to ethylcellulose polymer is 0.02:1 or less; more preferably 0.01:1 or less. More preferably, the oleogel contains no compound other than oil and ethylcellulose polymer.

The oleogel may be made by any of a variety of processes. Preferably, oil, ethylcellulose polymer, and optional additional ingredients are brought together to form a mixture. Preferably the mixture is heated to a temperature above the softening point of the ethylcellulose polymer. Preferably the mixture is subjected to mechanical agitation. Mechanical agitation may be suitably applied by passing the mixture through an extruder, passing the mixture through a static mixer, by rotating one or more mechanical object within the mixture (such as a spinning propeller blade or the elements of a rotor stator mixer), or a combination thereof. Preferably the mixture is heated and agitated at the same time.

Some suitable processes are batch processes, in which oil, ethylcellulose polymer, and optional additional ingredients are placed in a vessel, and the resulting mixture is heated and agitated, and then the entire mixture is removed from the vessel. Some other suitable processes are continuous. One suitable continuous process is extrusion, in which oil, ethylcellulose polymer, and optional other ingredients are continuously fed to the inlet or inlets of an extruder, which heats, agitates, and transports the resulting mixture, which is continuously removed from the extruder at an outlet.

Any suitable process for making oleogel for use in the method of the present invention involves heating a mixture of ethylcellulose polymer and oil to a temperature of 100°C or higher. The mixture is heated to a temperature at or above the softening point of the ethylcellulose polymer, and suitable ethylcellulose polymers have softening point of 100°C or higher. Preferably, while the mixture is at a temperature at or above the softening point of the ethylcellulose polymer, the mixture is stirred. In preferred embodiments, the mixture is heated to a temperature that is 10°C or more above the softening point of the ethylcellulose polymer, while the mixture is stirred. Preferably, stirring is maintained while the mixture is then cooled 10°C or more. The heated mixture is then cooled to 35°C or below.

The rate of cooling from 100°C to 35°C must be performed in a way that limits the rate of cooling to 0.6°C/min or slower; more preferably 0.5°C/min or slower; more preferably 0.4°C/min or slower. The statement that the cooling method limits the rate to X°C/min or slower herein means that there is no point during the cooling from 100°C to 35°C during which the cooling rate exceeds Y°C/min, where Y=2*X, and also means that the average rate of cooling from 100°C to 35°C is X°C/min or slower.

The rate of cooling may be controlled by any method. For example, the mixture at 100°C may be placed in an enclosure that has thermal insulation, so that heat from the mixture transfers to the surroundings slowly. For another example, the mixture at 100°C may be placed in an apparatus that regulates temperature, for example using a thermostat and heating elements, controlled by an operator or a circuit that gradually reduces the temperature.

In embodiments in which the mixture is heated to a temperature above 100°C, it is preferred to cool the mixture from the maximum temperature to 100°C by limiting the cooling rate to 2°C/min or slower, more preferably 1°C/min or slower.

After the mixture is cooled to 35°C, it is preferred to cool the mixture to room temperature (approximately 23°C). The rate of cooling from 35°C to 23°C is not critical.

The following are examples of the present invention.

The ethylcellulose polymer used was ETHOCEL™ STD 45 from Dow Chemical Company. The oils used were sunflower oil, standard canola oil, and omega-9 canola oil.

Separation of oleogel was measured as follows: Hot mixture of ethylcellulose polymer and oil was placed into cylindrical wells drilled into a block of metal. The metal block was 14 cm by 7 cm. Six identical cylindrical wells were formed in the block; each well had diameter 2.05 cm and height 2.53 cm, to give volume of 84 ml. The distance between wells and from each well to the nearest wall of the block was approximately 1 cm. After cooling to room temperature (23°C), the plug of oleogel was removed from the well and placed on filter paper and stored at room temperature for 300 hours. The amount of oil that transferred from the oleogel plug to the filter paper was measured as the amount of weight gained by the filter paper (Wt). The original weight of oil in the plug was Wo. Thus the percent lost from the plug to the paper was %Loss = 100*(Wo - Wp)/Wo.

The benefit of the inventive method was assessed by noting that the inventive method reduced %Loss as compared to the comparative method. The benefit was assessed quantitatively as follows:

$$\text{Benefit} = \% \text{ Loss Reduction} = 100*(Lc - Li)/Lc$$

where Lc = %Loss for comparative sample, and Li = %Loss for inventive sample

Comparative Example 1:

200 g of oil was mixed with 20 g ethylcellulose polymer. The mixture was heated to 165°C with stirring with a propeller mixer at 300 rpm, then cooled quickly to 135°C with stirring at 100 rpm, then cooled slowly to 120°C with stirring at 20 rpm. The hot mixture was poured into the wells of the metal block and set at room temperature to cool in an uncontrolled manner. Cooling rate between 100°C and 35°C was faster than 1°C/min.

Preparative Example 2

200 g of oil was mixed with 20 g ethylcellulose polymer. The mixture was heated to 150°C with stirring with a propeller mixer at 400 rpm, and held at 150°C for 40 minutes. Then the mixture was cooled slowly to 120°C with stirring at 75 rpm. The hot mixture was poured into the wells of the metal block and set into a drying cabinet for controlled cooling. The cooling rate from 100°C down to 35°C started at approximately 0.83°C/min and gradually fell to approximately 0.1°C/min, and the average cooling rate was 0.31°C/min. At 35°C, the metal block was removed from the drying cabinet and allowed to reach room temperature (23°C).

Example 3: Test results

Three different oils were tested in both the comparative method of Comparative Example 1 and the inventive method of Preparative Example 2. Results were as follows:

| oil | Benefit |
|---|---|
| sunflower | 38% |
| omega-9 canola | 25% |
| standard canola | 40% |

For all the oils, the inventive method provided a dramatic improvement in retaining oil in the oleogel.

**Claims**

1. A method of making an ethylcellulose oleogel comprising cooling a mixture of ethylcellulose polymer and oil from 100°C to 35°C at a rate of 0.6°C/min or slower.

2. The method of claim 1, further comprising the steps, prior to the cooling, of

   (a) bringing together ethylcellulose polymer and oil to form a mixture, wherein the ethylcellulose polymer has a softening point of 100°C or higher,
   (b) heating the mixture to a temperature Tmix equal to or above the softening point,
   (c) agitating the mixture at temperature Tmix,
   (d) cooling the mixture to 100°C.

3. The method of claim 1, wherein the ethylcellulose polymer has ethoxyl substitution content of 47% to 50%.

4. The method of claim 1, wherein the food oil comprises one or more triglycerides extracted from plants.

5. The method of claim 1, wherein the oleogel either comprises no surfactant or comprises surfactant in a weight ratio of surfactant to ethylcellulose polymer of 0.02:1 or less.

**Patentansprüche**

1. Verfahren zum Herstellen eines Ethylcellulose-Oleogels, umfassend Kühlen einer Mischung von Ethylcellulose-Polymer und Öl von 100 °C auf 35 °C bei einer Geschwindigkeit von 0,6 °C / min oder langsamer.

2. Verfahren nach Anspruch 1, ferner umfassend die Schritte vor dem Kühlen von

   (a) Zusammenbringen von Ethylcellulose-Polymer und Öl, um eine Mischung zu bilden, worin das Ethylcellulose-Polymer einen Erweichungspunkt von 100 °C oder höher aufweist,
   (b) Erhitzen der Mischung auf eine Temperatur Tmix gleich oder über dem Erweichungspunkt,
   (c) Rühren der Mischung bei der Temperatur Tmix,
   (d) Kühlen der Mischung auf 100 °C.

3. Verfahren nach Anspruch 1, wobei das Ethylcellulose-Polymer einen Gehalt an Substitution von Ethoxyl von 47% bis 50% aufweist.

4. Verfahren nach Anspruch 1, wobei das Speiseöl ein oder mehrere Triglyceride umfasst, die aus Pflanzen extrahiert sind.

5. Verfahren nach Anspruch 1, wobei das Oleogel entweder kein Tensid umfasst oder Tensid in einem Gewichtsverhältnis von Tensid zu Ethylcellulose-Polymer von 0,02:1 oder weniger umfasst.

**Revendications**

1. Procédé de fabrication d'un oléogel d'éthylcellulose comprenant le refroidissement d'un mélange de polymère d'éthylcellulose et d'huile de 100 °C à 35 °C à une vitesse de 0,6 °C/min ou moins.

2. Procédé selon la revendication 1, comprenant en outre, avant le refroidissement, les étapes constituées par :

   (a) le fait d'amener le polymère d'éthylcellulose et l'huile ensemble pour former un mélange, dans lequel le polymère d'éthylcellulose présente un point de ramollissement de 100 °C ou plus ;
   (b) le chauffage du mélange jusqu'à une température Tmix qui est égale ou supérieure au point de ramollissement ;
   (c) l'agitation du mélange à la température Tmix ;
   (d) le refroidissement du mélange jusqu'à 100 °C.

3. Procédé selon la revendication 1, dans lequel le polymère d'éthylcellulose présente une teneur de substitution en éthoxyle de 47 % à 50 %.

4. Procédé selon la revendication 1, dans lequel l'huile alimentaire comprend un ou plusieurs triglycéride(s) qui est/sont extrait(s) à partir de plantes.

5. Procédé selon la revendication 1, dans lequel l'oléogel soit ne comprend pas d'agents tensioactifs, soit comprend un agent tensioactif en un rapport en poids agent tensioactif sur polymère d'éthylcellulose de 0,02:1 ou moins.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010143066 A

- WO 2014004018 A